Europäisches Patentamt

(19) European Patent Office

Office européen des brevets

(11) Numéro de publication: **0 033 818**
**B1**

(12) **FASCICULE DE BREVET EUROPEEN**

(45) Date de publication du fascicule du brevet:
07.03.84

(21) Numéro de dépôt: **80401895.0**

(22) Date de dépôt: **31.12.80**

(51) Int. Cl.³: **H 04 N 5/05**

(54) **Téléviseur comportant un circuit de synchronisation ligne.**

(30) Priorité: **11.01.80 FR 8000612**

(43) Date de publication de la demande:
**19.08.81 Bulletin 81/33**

(45) Mention de la délivrance du brevet:
**07.03.84 Bulletin 84/10**

(84) Etats contractants désignés:
**DE GB IT**

(56) Documents cités:
**FR - A - 2 218 707**
**US - A - 4 093 963**
**US - A - 4 144 545**

(73) Titulaire: **THOMSON-BRANDT, 173, Boulevard
Haussmann, F-75379 Paris Cedex 08 (FR)**

(72) Inventeur: **Soulard, Patrice, THOMSON-CSF
SCPI 173, bld Haussmann, F-75360 Paris Cedex 08 (FR)**

(74) Mandataire: **Grynwald, Albert et al, THOMSON-CSF
SCPI 173, Bld Haussmann, F-75379 Paris Cedex 08 (FR)**

Téléviseur comportant un circuit de synchronisation ligne

La présente invention se rapporte à un téléviseur comportant un circuit de synchronisation ligne, notamment un téléviseur destiné à recevoir les signaux d'un magnétoscope ainsi que les signaux de télédiffusion (TDF).

Il est connu, pour réaliser un circuit de synchronisation pour un téléviseur, d'utiliser un circuit intégré, par exemple celui dont les références normalisées sont TBA 920. Ce circuit reçoit directement les signaux vidéo et à partir de ceux-ci, ainsi que des signaux de retour des étages de puissance de déviation ligne, il synchronise un oscillateur interne. L'oscillateur interne ainsi synchronisé commande un étage de sortie qui délivre des signaux carrés à rapport cyclique variable destinés à commander l'étage de puissance de déviation ligne. Ce circuit comprend notamment une boucle à verrouillage de phase qui présente un filtre extérieur au circuit intégré et connecté entre plusieurs bornes de ce dernier. Par ailleurs une autre borne de ce circuit intégré est destinée à recevoir un signal extérieur de commande qui sert à modifier, d'une part, le gain de la boucle de phase et, d'autre part, la valeur d'une résistance intégrée faisant partie du filtre lors de la modification de l'origine de l'émission, c'est-à-dire lorsqu'on passe de la réception des émissions TDF à la réception des émissions enregistrées sur un magnétoscope et vice-versa. On sait en effet que si les normes de ces émissions sont les mêmes, les fluctuations des paramètres caractéristiques de ces émissions à l'intérieur des tolérances sont différentes.

Pour les émissions de télédiffusion la stabilité de la fréquence ligne est relativement grande et les fluctuations de cette fréquence sont d'amplitude faible et de fréquence basse. Par contre le niveau du signal reçu par le téléviseur peut être très faible et dans ce cas le signal vidéo, et donc les impulsions de synchronisation, seront bruités.

Pour les émissions reçues d'un magnétoscope le bruit est toujours relativement faible même si les bandes magnétiques proviennent d'une duplication qui a tendance à détériorer le rapport signal/bruit. Par contre les variations de la fréquence ligne ont des amplitudes plus importantes et des fréquences plus élevées car elles dépendent en grande partie des instabilités de la mécanique de lecture. Par ailleurs la plupart des magnétoscopes comportent deux têtes de lecture dont la commutation s'effectue pendant le retour trame. On constate alors un saut de phase au moment de cette commutation du à la différence entre la longueur parcourue par la tête de lecture et la longueur de la piste enregistrée.

Pour recevoir ces deux types d'émission dans les meilleurs conditions, l'invention propose un récepteur de télévision comportant un circuit destiné à synchroniser les signaux engendrés par un oscillateur de balayage horizontal aux signaux vidéo reçus, ce circuit comprenant, dans une boucle de régulation, un amplificateur et des moyens de filtrage et présentant un circuit intégré du type TBA 920 ayant une entrée (10) habituellement destinée à recevoir un signal représentant l'origine — télédiffusion ou magnétoscope — des signaux vidéo reçus, le gain de l'amplificateur pouvant prendre deux valeurs distinctes selon la valeur du signal appliqué sur cette entrée (10), caractérisé en ce qu'il comporte un moyen pour appliquer sur ladite entrée (10) habituellement destinée à recevoir un signal représentant l'origine des signaux reçus, à la place d'un signal représentant l'origine de la réception, un signal représentant le sens du balayage vertical de façon que le gain de l'amplificateur soit indépendant de l'origine des signaux vidéo reçus mais ait une première valeur pendant les allers de balayage vertical et une seconde valeur, supérieure à la première, pendant les retours de balayage vertical, un moyen étant en outre prévu pour que la configuration du filtre soit fonction de l'origine des signaux reçus.

Ce circuit permet, grâce au grand gain pendant le retour trame, une réception de bonne qualité des signaux en provenance d'un magnétoscope car on compense ainsi le saut de phase dû au mécanisme du magnétoscope et cela sans compromettre la qualité de la réception en mode TDF.

Il est, certes, déjà en soi connu d'augmenter le gain de l'amplificateur pendant le retour de balayage vertical en cas de réception des signaux d'un magnétoscope mais les réalisations antérieures présentant cette disposition ne permettent pas une réception satisfaisante en mode TDF.

L'invention combine ainsi de façon avantageuse les dispositions déjà connues pour les circuits intégrés du type TBA 920 ou analogue avec celles prévues dans d'autres circuits pour permettre la réception des deux types d'émission dans les meilleures conditions.

Dans le mode de réalisation préféré on fait appel à un circuit intégré, tel que le TBA 920, comprenant une entrée habituellement destinée à recevoir un signal représentant l'origine des signaux reçus et sur laquelle on applique, contrairement à l'utilisation antérieure de ce circuit intégré, un signal représentant le sens du balayage vertical.

D'autres particularités et avantages de l'invention apparaîtront dans la description suivante présentée à titre d'exemple et faite en regard des figures annexées suivantes:

— la figure 1, qui représente un ensemble de courbes de réponse d'un circuit de synchronisation ligne;

— la figure 2, qui représente le schéma d'un circuit de synchronisation ligne du type connu;

— la figure 3, qui représente le schéma d'un circuit de synchronisation selon l'invention.

En appelant $\varphi_i$ la phase des impulsions de synchronisation contenues dans le signal vidéo et $\varphi_s$ la phase des impulsions en sortie du circuit TBA 920, on peut étudier le comportement de ce circuit en traçant les courbes ayant en ordonnées le rapport $\dfrac{\varphi_i - \varphi_s}{\varphi_i}$, et en abscisses la fréquence $f_m$ de modulation parasite des impulsions de synchronisation ligne.

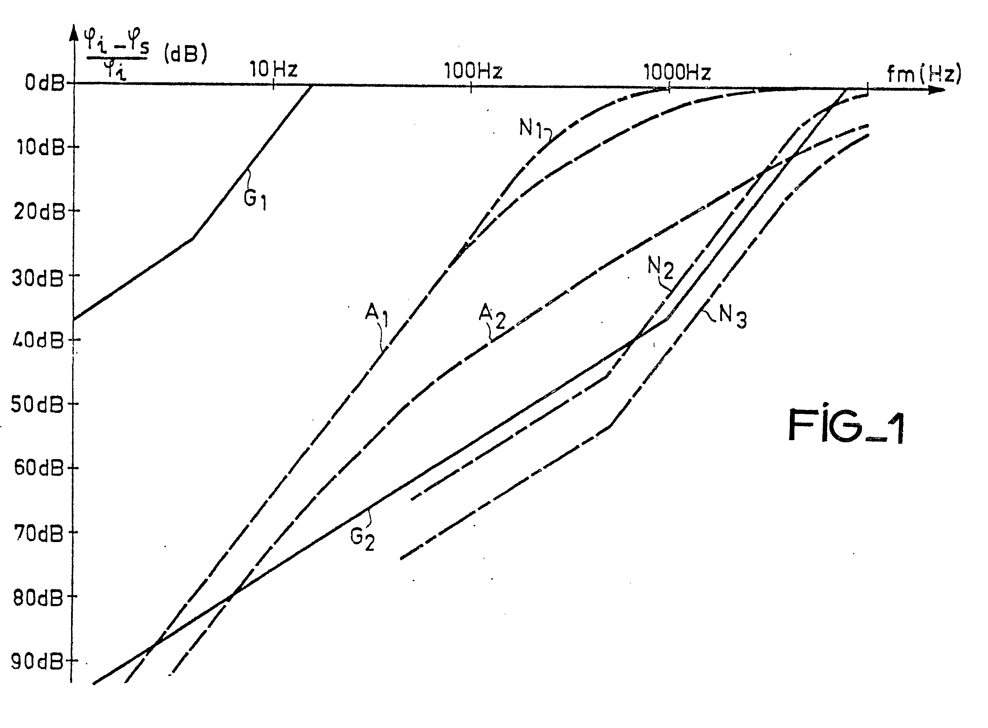

On a cherché quel était le meilleur compromis entre, d'une part, la sensibilité au bruit qui entraine l'apparition de déchirements sur l'écran, et d'autre part, l'effet dit de drapeau produit par une intégration trop forte pour éliminer ce bruit. Ceci a amené à deux gabarits représentés sur la figure 1. L'un de ces gabarits, $G_1$, correspond au mode télédiffusion. L'autre, $G_2$, correspond au mode magnétoscope. Dans chacun de ces deux modes, si la courbe de réponse de la boucle de phase se trouve en dessous du gabarit, l'influence du bruit l'emporte, et si elle se trouve au-dessus il apparait un signal en drapeau. Le gabarit correspond à la limite tolérable pour le signal en drapeau et il est souhaitable que la courbe de réponse de la boucle de phase se trouve entièrement en-dessous du gabarit correspondant au mode d'exploitation. Cette condition étant réalisée, on cherchera par ailleurs à minimiser le bruit.

Il n'est pas pensable de situer dans les deux cas la courbe de réponse en-dessous de $G_2$, parce que dans bien des cas le signal reçu en mode télédiffusion serait trop faible et donc l'influence du bruit trop grande.

C'est pour cette raison que l'on utilise jusqu'à présent la commutation mentionnée plus haut qui permet d'obtenir respectivement les deux courbes $A_1$ et $A_2$ de la figure 1. On constate dans ces conditions que si la courbe $A_1$ est correctement située pour le mode télédiffusion, la courbe $A_2$ entraine un risque important d'effet de drapeau en mode magnétoscope.

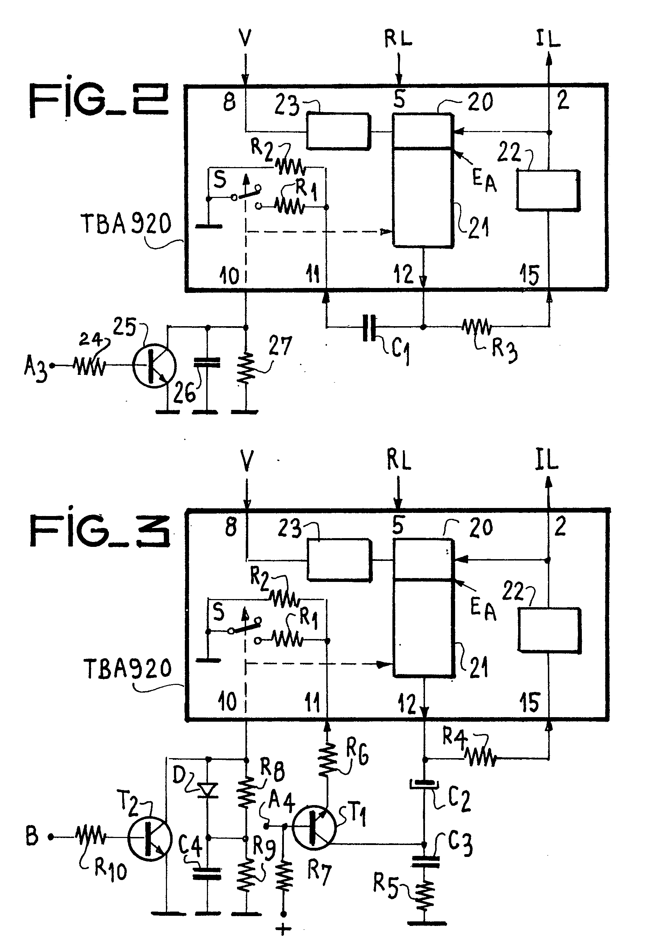

Le circuit intégré TBA 920 de la figure 2, représenté d'une manière très simplifiée et limitée aux éléments nécessaires pour la compréhension de l'invention, reçoit sur sa borne 8 les signaux vidéo V, et sur sa borne 5 les impulsions de retour ligne $R_L$ en provenance du transformateur de sortie de l'étage de déviation horizontale.

Il émet par sa borne 2 les impulsions de commande IL de cet étage de sortie ligne.

Les circuits internes du TBA 920 comprennent un générateur de courant d'erreur $E_A$ comprenant un comparateur de phase 20 suivi d'un amplificateur 21 à gain commutable, c'est-à-dire dont le gain peut prendre deux valeurs différentes. La sortie de ce générateur de courant d'erreur est réunie à la borne 12.

On trouve par ailleurs un oscillateur 22 commandé en courant dont l'entrée de commande est réunie à la borne 15. Le comparateur de phase 20 de $E_A$ reçoit le signal de cet oscillateur et les impulsions de synchronisations lignes extraites du signal V par un circuit 23.

En réunissant la borne 12 à la borne 15 par l'intermédiaire d'un filtre destiné à obtenir une réponse correcte on commande l'oscillateur par le courant d'erreur, ce qui ferme la boucle de régulation de phase.

Ce filtre est, dans cet exemple, constitué d'une résistance $R_3$ réunissant directement les bornes 12 et 15, et d'un condensateur $C_1$ en série par l'intermédiaire de la borne 11 avec un jeu de résistances $R_1$ et $R_2$ internes au TBA 920. Ce condensateur $C_1$ en série avec ces résistances réunit la borne 12 à la masse.

La résistance $R_2$ est toujours connectée entre le condensateur $C_1$ et la masse, et la résistance $R_1$ shunte la résistance $R_2$ selon qu'un commutateur S est ouvert ou fermé. Ce commutateur S est bien entendu réalisé avec des circuits électroniques bien qu'il soit représenté sous la forme d'un interrupteur mécanique. Pour commander cet interrupteur S on met la borne 10 du circuit TBA 920 soit à la masse soit à un potentiel haut de l'ordre de 12 volts. Lorsque la borne 10 est à la masse (mode magnétoscope) l'interrupteur est ouvert et il est fermé dans l'autre cas.

De plus le signal sur la borne 10 permet de commuter le gain du générateur de courant d'erreur entre deux valeurs déterminées.

En réception en mode magnétoscope S est ouvert, le gain est de 120 000 et la résistance $R_2$ du filtre, seule en circuit, a une valeur de 2,2 kiloohms.

Lors de la réception de signaux TDF, S est fermé, le gain est de 50 000 et la résistance du filtre, qui est la résistance équivalente à $R_1$ et $R_2$ en parallèle, à une valeur très sensiblement égale à 100 ohms (la valeur de $R_1$).

Pour commander l'interrupteur S on part d'une tension délivrée par le magnétoscope lorsqu'il est en fonctionnement ou par l'ensemble de commande du téléviseur et qui est appliquée sur une borne $A_3$. Cette tension est appliquée sur la base d'un transistor 25 de type NPN par l'intermédiaire d'une résistance 24. L'émetteur de ce transistor est à la masse et son collecteur est relié à l'entrée 10 du circuit. Entre émetteur et collecteur sont branchés un condensateur 26 et une autre résistance 27. Lorsqu'une tension positive est appliquée sur la borne $A_3$ le transistor est conducteur et l'entrée 10 est à la masse.

En prenant pour $C_1$ une valeur de 25 microfarads et pour $R_3$ une valeur de 33 kiloohms, on obtient les deux courbes de réponse $A_1$ et $A_2$ de la figure 1 selon que l'on est en mode télédiffusion ou magnétoscope.

Le saut de phase lors de la commutation entre les deux têtes de lecture du magnétoscope pendant le retour trame peut amener un effet de drapeau (courbure) extrêmement désagréable dans le haut de l'image (c'est-à-dire au début de l'image) avec la courbe de réponse $A_2$, mais celle-ci correspond au meilleur compromis actuel entre l'effet de drapeau et l'effet de déchirement et on ne peut la ramener en dessous du gabarit $G_2$.

Selon l'invention on introduit une commutation supplémentaire qui permet d'obtenir une courbe de réponse entièrement en dessous du gabarit $G_2$, et donc très sensible au bruit, uniquement pendant le retour trame lorsque le signal vidéo n'est pas visible sur l'écran. Pendant l'aller du balayage par contre, on utilise une courbe de réponse qui se trouve au dessus du gabarit $G_2$ sur sa plus grande partie.

Pour obtenir cette commutation et cette courbe supplémentaire, on utilise le schéma de la figure 3. Dans ce schéma la sortie 12 du TBA 920 est reliée à son entrée 15 par une résistance $R_4$. Cette sortie 12 est également reliée à la masse par un condensateur $C_2$ en série avec un condensateur $C_3$ puis une résistance $R_5$. Le point commun aux condensateurs $C_2$ et $C_3$ est relié au collecteur d'un transistor NPN $T_1$. L'émetteur de ce transistor $T_1$ est relié à la borne 11 par une résistance $R_6$. La base du transistor $T_1$ est reliée à une source de tension positive, 12 volts par exemple, par l'intermédiaire d'une résistance $R_7$. La

base du transistor $T_1$ est également reliée à une entrée $A_4$ sur laquelle est reçu un signal de commande qui est une mise à la masse en mode magnétoscope et une absence de signal en mode TDF.

Par ailleurs, le circuit de commande connecté à la borne 10 comprend un transistor NPN $T_2$ dont le collecteur est relié à la borne 10 et l'émetteur à la masse, et dont la base reçoit un signal de commande par l'intermédiaire d'une résistance $R_{10}$ à partir d'une entrée B. Cette borne 10 est également reliée à la masse par l'intermédiaire de deux résistances $R_8$ et $R_9$ en série. La résistance $R_8$ est shuntée par une diode D dont l'anode est connectée à la borne 10 et la résistance $R_9$ est shuntée par un condensateur $C_4$. On applique à l'entrée B les signaux de suppression (c'est-à-dire de retour trame) en provenance du balayage vertical et qui sont caractérisés par des impulsions positives d'une durée de 1,2 milliseconde avec une période de répétition de 20 millisecondes. Entre ces impulsions le point B est relié à la masse.

En mode TDF, le transistor $T_1$ est passant. Pendant l'aller du balayage vertical le transistor $T_2$ est bloqué puisque sa base est ramenée au potentiel de la masse par l'intermédiaire de la résistance $R_{10}$. L'interrupteur S est donc fermé et l'amplificateur $E_A$ a un gain de 50 000. Dans ces conditions avec comme valeurs des éléments: $R_4$ = 15 kiloohms, $C_2$ = 47 microfarads, $C_3$ = 0,22 microfarads, $R_5$ = 1,3 kiloohms, $R_6$ = 100 ohms, le filtre connecté entre les bornes 12 et 15 se réduit essentiellement aux résistances $R_1$, $R_4$ et $R_6$ et au condensateur $C_2$, puisque le transistor $T_1$ est saturé et que l'impédance du condensateur $C_3$ est très importante devant celles du condensateur $C_2$ et de la résistance $R_1$.

On retrouve dans ces conditions une courbe de réponse $N_1$ très sensiblement équivalente à la courbe de réponse $A_1$ et qui est tout à fait correcte pour l'utilisation dans ce mode TDF.

Pendant le retour trame, le transistor $T_2$ est saturé et la forme de la courbe de réponse est changée mais cela n'est pas gênant puisque c'est dans une partie non visible de l'image et qu'il n'y a pas d'écart de phase particulier à rattraper pendant ce retour trame. On n'a donc pas représenté la courbe de réponse correspondante pour simplifier l'explication.

En mode magnétoscope, le point $A_4$ étant mis à la masse, le transistor $T_1$ est ouvert, et le filtre connecté entre les points 12 et 15 consiste essentiellement en la résistance $R_4$, le condensateur $C_3$, et la résistance $R_5$ puisque l'impédance du condensateur $C_2$ est négligeable devant l'impédance du condensateur $C_3$. Les résistances $R_1$, $R_2$ et $R_6$ n'interviennent donc plus.

Le signal sur l'entrée B a donc pour seul effet de modifier le gain du générateur de courant $E_A$.

Durant l'aller du balayage vertical, on obtient la courbe de réponse $N_2$ sur la figure 1 dont on constate qu'elle se rapproche plus du gabarit $G_2$ que la courbe $A_2$ mais qu'elle présente quand même toujours un risque de flottement en réponse au rattrapage des sauts de phase.

Pendant le retour de balayage vertical, la commutation du gain provoque une simple translation de la courbe $N_2$ qui devient la courbe $N_3$ dont on voit

qu'elle est entièrement située en dessous du gabarit $G_2$. Dans ces conditions, le rattrapage du saut de phase dû à la commutation des têtes est tout à fait correct pendant le retour de balayage trame mais l'influence du bruit peut être trop importante. Cette influence de bruit est dans ce cas sans importance puisque le retour de balayage n'est pas visible sur l'écran du téléviseur. Lorsque l'image recommence à devenir visible on se retrouve de nouveau sur la courbe $N_2$ avec un rattrapage complet du saut de phase, une disparition donc du flottement en début d'image, et une influence négligeable du bruit.

Dans une réalisation particulière du circuit permettant de commander le point 10 à partir de l'entrée B, on a pris comme valeurs: $R_8$ = 33 kiloohms, $R_9$ = 100 kiloohms, $R_{10}$ = 56 kiloohms, et $C_4$ = 0,22 microfarad. La diode D permet de ne pas décharger le condensateur $C_4$ lorsque le transistor $T_2$ est saturé. Ainsi, dès que ce transistor se rebloque, le potentiel à la borne 10 remonte à la valeur de charge du condensateur, lequel ne se décharge que très légèrement par la résistance $R_9$.

## Revendications

1. Récepteur de télévision comportant un circuit destiné à synchroniser les signaux engendrés par un oscillateur de balayage horizontal aux signaux vidéo reçus, ce circuit comprenant, dans une boucle de régulation, un amplificateur et des moyens de filtrage et présentant un circuit intégré du type TBA 920 ayant une entrée (10) habituellement destinée à recevoir un signal représentant l'origine — télédiffusion ou magnétoscope — des signaux vidéo reçus, le gain de l'amplificateur pouvant prendre deux valeurs distinctes selon la valeur du signal appliquée sur cette entrée (10), caractérisé en ce qu'il comporte un moyen $(T_2)$ pour appliquer sur ladite entrée (10) habituellement destinée à recevoir un signal représentant l'origine des signaux reçus, à la place d'un signal représentant l'origine de la réception, un signal représentant le sens du balayage vertical de façon que le gain de l'amplificateur soit indépendant de l'origine des signaux vidéo reçus mais ait une première valeur pendant les allers de balayage vertical et une seconde valeur, supérieure à la première, pendant les retours de balayage vertical, un moyen $(T_1)$ étant en outre prévu pour que la configuration du filtre soit fonction de l'origine des signaux reçus.

2. Récepteur selon la revendication 1, caractérisé en ce que le signal appliqué sur ladite entrée (10) au cours de l'aller du balayage correspond à celui qui représentait la réception en mode magnétoscope et le signal appliqué sur cette entrée au cours du retour du balayage vertical correspond à celui qui représentait la réception en mode télédiffusion.

3. Récepteur selon la revendication 1 ou 2, caractérisé en ce que le filtre comprenant des éléments $(R_1, R_2)$ internes au circuit intégré, des moyens sont prévus pour que ces éléments n'interviennent pas lors de la réception de signaux émis par un magnétoscope.

4. Récepteur selon la revendication 3, caractérisé en ce que le signal représentant l'origine des signaux reçus commande la conduction d'un interrupteur (T₁) extérieur au circuit intégré pour modifier la configuration du filtre.

5. Récepteur selon la revendication 4, caractérisé en ce que les éléments du filtre internes au circuit intégré étant des résistances intégrées, l'interrupteur (T₁), qui est ouvert en mode magnétoscope et fermé en mode télédiffusion, est relié, d'un côté à la borne (11) de sortie des résistances (R₁, R₂) intégrées et, de l'autre côté, d'une part à la borne (12) de sortie de l'amplificateur (E_A) par l'intermédiaire d'un premier condensateur (C₂) et, d'autre part, à la masse par une connexion comprenant un second condensateur (C₃) de faible capacité par rapport au premier, la sortie de l'amplificateur étant par ailleurs reliée à une entrée (15) de l'oscillateur faisant partie du circuit intégré (TBA 920) par l'intermédiaire d'une résistance (R₄) externe audit circuit intégré.

6. Récepteur selon la revendication 5, caractérisé en ce qu'une résistance (R₅) est interposée entre le second condensateur (C₃) et la masse.


**Patentansprüche**

1. Fernsehempfänger mit einer Schaltung zur Synchronisation der von einem Horizontalablenkoszillator erzeugten Signale mit den empfangenen Videosignalen, wobei diese Schaltung in einer Regelschleife einen Verstärker und Filtermittel enthält und eine integrierte Schaltung vom Typ TBA 920 aufweist, die einen Eingang (10) aufweist, welcher gewöhnlich ein Signal empfangen soll, das den Ursprung — Fernsehsendung oder Magnetoskop — der empfangenen Videosignale darstellt, wobei die Verstärkung des Verstärkers zwei unterschiedliche Werte annehmen kann, je nach dem Wert des an diesen Eingang (10) angelegten Signals, dadurch gekennzeichnet, dass er eine Einrichtung (T₂) enthält, um an den genannten Eingang (10), der gewöhnlich ein Signal empfangen soll, welches den Ursprung der Empfangssignale darstellt, anstelle eines den Ursprung des Empfangs darstellenden Signals ein Signal anzulegen, welches den Sinn der senkrechten Ablenkung darstellt, so dass die Verstärkung des Verstärkers unabhängig vom Ursprung der empfangenen Videosignale ist, jedoch während der senkrechten Ablenkhinbewegungen einen ersten Wert und während der senkrechten Rückbewegungen einen zweiten Wert aufweist, der grösser als der erste ist, wobei ferner eine Einrichtung (T₁) vorgesehen ist, damit die Ausbildung des Filters von dem Ursprung der empfangenen Signale abhängt.

2. Empfänger nach Anspruch 1, dadurch gekennzeichnet, dass das an den genannte Eingang (10) während der Ablenkhinbewegung angelegte Signal demjenigen entspricht, das im Magnetoskopbetrieb den Empfang darstellt, während das an diesen Eingang während des senkrechten Ablenkrücklaufs angelegte Signal demjenigen entspricht, welches bei Fernsehempfangsbetrieb den Empfang darstellt.

3. Empfänger nach Anspruch 1 oder 2, dadurch gekennzeichnet, dass das Filter innere Komponenten (R₁, R₂) der integrierten Schaltung enthält und Mittel vorgesehen sind, damit diese Komponente während des Empfangs von Signalen auf einem Magnetoskop unwirksam sind.

4. Empfänger nach Anspruch 3, dadurch gekennzeichnet, dass das Signal, welches den Ursprung der empfangenen Signale darstellt, den Leitungszustand eines Unterbrechers (T₁) steuert, der ausserhalb der integrierten Schaltung vorgesehen ist, um die Ausbildung des Filters zu verändern.

5. Empfänger nach Anspruch 4, dadurch gekennzeichnet, dass die Elemente des Filters, die sich im Inneren der integrierten Schaltung befinden, integrierte Widerstände sind und der Unterbrecher (T), der im Magnetoskopbetrieb geöffnet und im Fernsehempfangsbetrieb geschlossen ist, auf einer Seite mit dem Ausgangsanschluss (11) der integrierten Widerstände (R₁, R₂) und auf der anderen Seite einerseits verbunden ist mit dem Ausgangsanschluss (12) des Verstärkers (E_A), und zwar über einen ersten Kondensator (C₂), und andererseits mit Masse über eine Verbindung verbunden ist, welche einen zweiten Kondensator (C₃) umfasst, dessen Kapazität gegenüber derjenigen des ersten klein ist, wobei der Ausgang des Verstärkers ferner mit einem Eingang (15) des Oszillators verbunden ist, der Bestandteil der integrierten Schaltung (TBA 920) ist, und zwar über einen Widerstand (R₄), der ausserhalb der integrierten Schaltung liegt.

6. Empfänger nach Anspruch 5, dadurch gekennzeichnet, dass ein Widerstand (R₅) zwischen den zweiten Kondensator (C₃) und Masse eingefügt ist.


**Claims**

1. Television receiver comprising a circuit intended to synchronize the signals generated by a horizontal deflection oscillator with the video signals received, said circuit comprising in a control loop an amplifier and filter means and presenting an integrated circuit of type TBA 920 having an input (10) generally intended to receive a signal representing the origin — television transmission or magnetoscope — of the video signals received, the gain of the amplifier being able to assume two different values according to the value of the signal applied to said input (10), characterized in that it comprises a means (T₂) for applying to said input (10) generally intended to receive a signal representing the origin of the signals received, instead of a signal representing the origin of the reception, a signal representing the direction of the vertical scanning in a manner that the gain of the amplifier is independent of the origin of the video signals received but has a first value during the forward vertical scans and a second value, greater than the first, during the return vertical scans, a means (T₁) also being provided to ensure that the configuration of the filter is a function of the origin of the signals received.

2. Receiver according to claim 1, characterized in that the signal applied to said input (10) during the forward scanning corresponds to that which represents the reception in magnetoscope mode and the signal applied to said input during the return vertical scanning corresponds to that which represents the reception in television transmission mode.

3. Receiver according to claim 1 or 2, characterized in that the filter comprises internal components ($R_1$, $R_2$) of the integrated circuit and means are provided to ensure that said components do not intervene during the reception of signals emitted by a magnetoscope.

4. Receiver according to claim 1, characterized in that the signal representing the origin of the signals received controls the conduction of an interrupter ($T_1$) outside the integrated circuit for modifying the configuration of the filter.

5. Receiver according to claim 4, characterized in that the filter components which are inside the integrated circuit are integrated resistors and the interrupter ($T_1$), which is open in the magnetoscope mode and closed in the television transmission mode, is connected on the one side to the output terminal (11) of the integrated resistors ($R_1$, $R_2$) and on the other side on the one hand to the output terminal (12) of the amplifier ($E_A$) via a first capacitor ($C_2$) and, on the other hand, to ground by a connection comprising a second capacitor ($C_3$) of low capacitance with respect to the first, the output of the amplifier being further connected to an input (15) of the oscillator forming part of the integrated circuit (TBA 920) via a resistor ($R_4$) outside said integrated circuit.

6. Receiver according to claim 5, characterized in that a resistor ($R_5$) is interposed between the second capacitor ($C_3$) and ground.

FIG_1

FIG_2

FIG_3